Europäisches Patentamt

European Patent Office

Office européen des brevets

(19)

(11) **EP 0 697 428 B1**

(12) **EUROPÄISCHE PATENTSCHRIFT**

(45) Veröffentlichungstag und Bekanntmachung des Hinweises auf die Patenterteilung:
**01.12.1999 Patentblatt 1999/48**

(51) Int Cl.$^6$: **C08G 63/91**, C08G 63/60, C08G 63/78

(21) Anmeldenummer: **95112877.6**

(22) Anmeldetag: **16.08.1995**

(54) **Verfahren zur Herstellung von linearen, w-Hydroxycarbonsäureeinheiten enthaltenden Copolyestern**

Process for the preparation of linear w-carboxylic acid unit containing copolyesters

Procédé pour la production de copolyesters linéaires contenant de l'acide carboxylique w-hydroxy

(84) Benannte Vertragsstaaten:
**BE CH DE ES FR IT LI NL**

(30) Priorität: **19.08.1994 DE 4429524**

(43) Veröffentlichungstag der Anmeldung:
**21.02.1996 Patentblatt 1996/08**

(73) Patentinhaber: **INVENTA-FISCHER AG**
**8002 Zürich (CH)**

(72) Erfinder:
- **Kaegi, Werner**
  **CH-7013 Domat/Ems (CH)**
- **Nothhelfer, Klaus**
  **CH-7430 Thusis (CH)**
- **Stibal, Werner**
  **CH-7203 Trimmis (CH)**

(74) Vertreter: **Becker, Eberhard, Dr. et al**
**Patentanwälte**
**Becker, Kurig, Straus**
**Bavariastrasse 7**
**80336 München (DE)**

(56) Entgegenhaltungen:
**US-A- 4 680 345**

- **PATENT ABSTRACTS OF JAPAN vol. 009, no. 153 (C-288), 27.Juni 1985 & JP 60 031525 A (TOYO BOSEKI KK), 18.Februar 1985,**
- **PATENT ABSTRACTS OF JAPAN vol. 011, no. 150 (C-422), 15.Mai 1987 & JP 61 283619 A (TOYOBO CO LTD), 13.Dezember 1986,**
- **DATABASE WPI Section Ch, Week 9205 Derwent Publications Ltd., London, GB; Class A23, AN 92-036161 XP002025657 & JP 03 281 525 A (TORAY IND INC) , 12.Dezember 1991**
- **DATABASE WPI Section Ch, Derwent Publications Ltd., London, GB; Class A23, AN 73-08009U XP002025658 & JP 48 004 116 B (TOYO SPINNING CO LTD)**
- **DATABASE WPI Section Ch, Week 9020 Derwent Publications Ltd., London, GB; Class A23, AN 90-152364 XP002025674 & JP 02 097 519 A (MITSUBISHI RAYON KK) , 10.April 1990**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Herstellung von linearen Copolyestern (COPET), die ω-Hydroxycarbonsäureeinheiten enthalten, aus Polyethylenterephthalat, diese Copolyester selbst und ihre Verwendung zur Herstellung von Hohlkörpern, insbesondere von Flaschen und Behältern, aber auch zur Herstellung von COPET-Fasern und Filamenten.

Während zur Herstellung von Polyester-Fasern und -Filamenten praktisch nur Homo-Polyethylenterephthalat (PET) verwendet wird, werden heute für die Herstellung von PET-Flaschen für kohlesäurehaltige Süßgetränke, etc. fast ausschließlich auf PET basierende Copolyester (COPET) eingesetzt, welche mit ca. 2 bis 5, teilweise bis 7 Mol-% Cokomponenten modifiziert sind.

Als Vorteile resultieren bei tieferen Verarbeitungstemperaturen infolge von tieferen Schmelzpunkten tiefer Acetaldehydgehalt und glasklare Transparenz infolge niedrigerer Kristallisationsgeschwindigkeit. Als Co-Komponenten sind Comonomere aus den Verbindungsklassen der Dicarbonsäuren (oder deren Methylester), Diole und Oxycarbonsäuren bekannt.

Für "bottle grade"-COPET werden bevorzugt Isophthalsäure, Naphthalin-2,6-dicarbonsäure, 1,4-Cyclohexandimethanol und Diethylenglykol, welches sich auch bei der Homo-PET-Herstellung in situ in kleinen Mengen bildet, eingesetzt (vgl. z.B. EP-O 041 035). Diese Comonomere werden den beiden Hauptkomponenten Terephthalsäure, bzw. Dimethylterephthalat und Ethylenglykol zu Beginn des Herstellprozesses, d.h. bei der Veresterung bzw. Umesterung zugegeben. Eine Zugabe am Schluß der PET-Herstellung führt zu einem drastischen Viskositätsabbau, der die Weiterverarbeitung in Frage stellt. Daraus folgt, daß gemäß Stand der Technik PET-Granulate für Flaschen und für textile Anwendungen nicht gleichzeitig in derselben Veresterungs- und Polykondensationsanlage hergestellt werden können, auch wenn das Problem der nachträglichen Mattierung von PET-Schmelzen für textile Zwecke heute gelöst ist (DE-40 39 857 C2).

Es gibt im Stand der Technik verschiedene Ansätze zur Erzeugung von Copolyestern aus PET-Schmelzen, die aber die Aufgabe, apparativ einfach, schnell und ohne Veränderung der Intrinsic-Viskosität (I.V.) einen tieferschmelzenden linearen, d.h. unverzweigten, statistischen Copolyester herzustellen, nicht oder nur teilweise erfüllen. (Dabei ist die I.V. eine für Flaschenpolyester gebräuchliche Maßzahl für das Molekulargewicht).

In EP-0 422 282 A1 wird ein Verfahren beschrieben, bei welchem das Dianhydrid einer aromatischen Tetracarbonsäure, vorzugsweise Pyromellithsäuredianhydrid, in eine PET-Schmelze dosiert und eingearbeitet wird. Das daraus bereitgestellte Granulat zeichnet sich in erster Linie durch eine sehr schnelle I.V.-Zunahme bei einer Festphasenpolykondensation schon bei relativ niedrigen Temperaturen aus, weil die zugesetzte Substanz die Polymerketten in einer zusätzlichen Polyadditionsreaktion verknüpft. Dabei entsteht im Prinzip ein Copolyester, wobei der Einfluß auf den Schmelzpunkt wegen der im Hin-blick auf die Nachkondensation optimalen Pyromellithsäuredianhydrid-Menge von 0,6 Gew.-% nur 2 °C beträgt, solange nicht zusätzlich Isophthalsäure als Cokomponente im Ausgangsmaterial für das Verfahren verwendet wird.

Das Dianhydrid hat schließlich noch den Nebeneffekt, daß die nach der Additionsreaktion an die Anhydridgruppierungen freigewordenen zweiten Carboxylgruppen in einer Folgereaktion zumindest teilweise zu Verzweigungen führen können. Dadurch wird zwar die sogenannte Schmelzefestigkeit beim Extrusionsblasformen erhöht, aber gleichzeitig die Fließeigenschaften verschlechtert.

Im Verfahren gemäß DE-41 31 362 A1 werden die üblichen Dicarbonsäuren und Diole als Cokomponenten verwendet und zwar in Form eines niedrigviskosen Pre-Copolymers mit hohem Comonomer-Anteil, das mit Homo-PET-Schmelze vermischt wird. In diesem Verfahren werden zur Herstellung des Prepolymers ein oder zwei zusätzliche Reaktoren und weiter ein Mischextruder zum Vermengen des Prepolymeren mit dem Homopolyester benötigt. Nach der bevorzugten Schmelze-Mischdauer von 5 bis 15 Minuten liegt bei diesem Verfahren noch kein Copolyester, sondern nur eine physikalische Polymermischung zur Granulierung vor, die annähernd immer noch den gleich hohen Schmelzpunkt wie der Homo-PET aufweist. Der erst bei der Festphasen-Nachkondensation gebildete Copolyester ist noch nicht völlig statistischer Natur, denn der Schmelzpunkt liegt um bis zu 2 °C höher als die Schmelztemperatur konventionell hergestellter, wirklich statistischer Copolyester gleicher Zusammensetzungen. Die Erklärung für den Copolymer-Bildungsmechanismus bei diesem Verfahren kann man auf Seite 3, Zeilen 44 bis 51 nachlesen: zunächst bilden sich nach genügend langer Schmelzeverweilzeit nur Block-Copolyester, die sich während der Nachkondensation umso eher einer statistischen Cokomponentenverteilung in den Molekülketten annähern, je niedermolekularer der zugemischte Copolyester mit den Comonomeren war. Als weiterer Nachteil dieses Verfahren gibt es eine untere Grenze für den I.V.-Wert und damit für das Molekulargewicht des Comonomer-Copolyesters, die durch die Wirtschaftlichkeit des Gesamtprozesses gegeben ist, weil ja die Polymermischung in ihrem I.V.-Wert gegenüber dem Homo-PET herabgesetzt wird.

In JP-A-61283619, zit. als Patent Abstracts of Japan Vol. 11, No. 150(C-422), und in US-4 680 345 wird ein Verfahren beschrieben, mit welchem elastische Polyester herstellbar sind, indem in einem Reaktionsgefäß eine Polyadditionsreaktion zwischen geschmolzenem aromatischen Polyester, insbesondere Polybutylenterephthalat und Lactonen in größeren Mengenanteilen kontinuierlich durchgeführt wird. Als Reaktionsbedingungen werden ein Temperaturbereich von 210 bis 260 °C und eine Reaktionszeit von 30 Minuten bis 6 Stunden angegeben. Dabei entsteht ein Block-Copolymer mit weichen Segmenten aus Polylacton, die Elastizität ergeben und harten kristallinen Segmenten des aromatischen Polyesters. Neben dem Nachteil der langen Reaktionszeit besteht die Schwierigkeit bei diesem Verfahren darin, daß sich im oberen Teil des Reaktors Gaspolster aus unreagiertem Lactondampf bilden, die ohne zusätzliche Maßnahmen (Senkrecht- oder Schrägstellen des Reaktors bzw. Einbau von Gassperren (baffles)) zu Störungen und Qualitätsverschlechterung führen.

Auch in den nachfolgenden acht Literaturstellen werden Reaktionen zwischen Polyester und Lactonen beschrieben:

J06172507 zit. als Derwent Abstr. Nr. AN 94-238850 beschreibt einen elastomeren Copolyester mit verbesserter Wärmebeständigkeit, der erhalten wird durch Reaktion eines aromatischen Polyesters mit einer Lactonverbindung, wobei eine Diolkomponente des aromatischen Polyesters eine spezielle Formel aufweist. Über das Herstellverfahren wird nichts besonderes ausgesagt, und als Elastomer wäre eine solche Copolyester-Zusammensetzung nicht für die Flaschenherstellung geeignet.

J05059192 zit. als Derwent Abstr. Nr. AN 93-121484 beschreibt ein kontinuierliches Herstellverfahren für elastische Polyesterfilme und -folien. Dabei werden aromatische, kristalline Polyester in einem Zweiwellenextruder mit Lactonverbindungen kontinuierlich einer Additions-Polymerisation unterworfen und daraus nach kurzer Verweilzeit von max. 30 Minuten bei max. 280°C direkt Folien gebildet. Der Vorteil der hohen Qualität der Folien muß aber erkauft werden durch Verwendung einer teuren Maschine, die als Reaktor und zum Entgasen von unreagiertem Lacton dient. Überdies werden bei diesem Verfahren dem Polyester vorzugsweise noch zusätzlich Zinn- oder Phosphorkatalysatoren zugesetzt, welche einen Einsatz auf dem Gebiet der Lebensmittelverpackung nicht zulassen würden. Unter den in den Ausführungsbeispielen angegebenen Bedingungen entstehen aber keine statistischen sondern Block-Copolyester (harte Blöcke aus aromatischem Polyester und weiche Polylacton-Blöcke). Dies ist ersichtlich an der im Verhältnis zur Caprolactonmenge relativ geringen Schmelzpunktabnahme des Polyesters, was mit den elastischen Eigenschaften korreliert.

J02099555 zit. als Derwent Abstr. Nr. AN 90-159117 beschreibt Copolyester auf der Basis von PET mit bis zu 5 Gew.-% β-Methyl-δ-valerolacton (MVL) als Comonomer und bis zu 50 Gew.-% Kristallisationsbeschleuniger. Die Herstellung erfolgt konventionell durch Veresterung und Polykondensation (mit Ringöffnungspolymerisation des Lactons bei der Polykondensation), und die Anwendung besteht in hochkristallinen Spritzgußartikeln, welche keine Transparenz aufweisen.

J02099554 zit. als Derwent Abstr. Nr. AN 90-159116 beansprucht einen zu J02099555 analogen Copolyester, mit dem Unterschied, daß anstelle von MVL bis zu 2 Gew-% ε-Caprolacton eingesetzt werden.

J02097519 zit. als Derwent Abstr. Nr. AN 90-152364 beschreibt Copolyester, welche hauptsächlich Terephthalsäure und Ethylenglykol sowie bis zu 5 Gew.-% MVL enthalten. Die Herstellung erfolgt konventionell, und als Anwendungen werden Fasern, Folien und Flaschen genannt.

J02097520 zit. als Derwent Abstr. Nr. AN 90-152365 ist analog zu J02097519, mit dem Unterschied, daß statt MVL bis zu 2 Gew.-% &Caprolacton einpolymerisiert wird.

J60031525 zit. als Derwent Abstr. Nr. AN 85-078330 beschreibt einen hochviskosen Block-Copolyester, der in fester Phase durch Reaktion zwischen einem Homopolyester (z.B. PET) und einem Lacton (z.B. ε-Caprolacton) entsteht. Solche Block-Copolyester haben immer noch einen ähnlich hohen Schmelzpunkt wie der Homopolyester und erlauben somit keine tiefere Verarbeitungstemperatur, wie sie für die Flaschenherstellung wichtig wäre.

J59157117 zit. als Derwent Abstr. Nr. AN 84-259558 beschreibt die Modifikation eines kristallinen, aromatischen Polyesters (z.B. PET oder PEN = Polyethylennaphthalat) mit 2 bis 5 Gew.-% Lacton, z.B. ε-Caprolacton durch Reaktion bei 180-260°C in Anwesenheit eines organischen Zinn-, Aluminium- oder Titankatalysators mit wahlweiser Verwendung eines Lösungsmittels. Die daraus resultierenden Eigenschaften machen den Copolyester geeignet für Filme, Folien oder Gefäße.

Aufgabe der vorliegenden Erfindung ist es daher, einen tieferschmelzenden linearen Copolyester mit gleicher Viskosität (I.V.) auf einfache und schnelle Art ohne die Nachteile des Standes der Technik aus einer Homo-PET-Schmelze zur Verfügung zu stellen.

Diese Aufgabe wird durch das Verfahren mit den kennzeichnenden Merkmalen des Anspruchs 1, die Copolyester des Anspruchs 11 und deren Verwendung gemäß den Ansprüchen 12 und 13 gelöst.

Die Unteransprüche beschreiben vorteilhafte Ausführungsformen des erfindungsgemäßen Verfahrens.

Die obige Problemstellung konnte erfindungsgemäß dadurch gelöst werden, daß als Comonomere Verbindungen aus der Stoffklasse der Lactone, bevorzugt ε-Caprolacton, in reiner monomerer Form in die PET-Schmelze eingemischt und in einem gegen Gasaustausch abgeschlossenen System unter Druck zur Reaktion gebracht wurden. Überraschenderweise bildet sich in der Schmelze - ohne daß dafür ein Reaktor oder Extruder notwendig ist - bereits nach einigen Minuten ein linearer, zum größten Teil umgesetzter, statistischer Copolyester mit erniedrigtem Schmelzpunkt. Unerwartet ist weiter die Tatsache, daß dabei die Intrinsic-Viskosität praktisch konstant bleibt, wenn das eingesetzte Lacton wasserfrei ist. Dies konnte nicht erwartet werden, weil aus der Literatur bekannt ist, daß Polylactone bei Temperaturen von über 200 °C zur Zersetzung neigen (vgl. R.D. Lundberg et al., Journal of Polymer Science, Part A-1, Vol. 7 (1969), überbrückender Absatz auf Seite 2928/ 2929), während die Temperatur einer PET-Schmelze mehr als 260 °C beträgt.

Obwohl die Reaktion zwischen Polyester und Lactonen sowie daraus resultierende Lacton-Copolyester im Prinzip bekannt sind, war es überraschend und nicht vorhersehbar, nach diesem apparativ äußerst einfachen Verfahren, und ohne daß dafür zusätzliche Katalysatoren nötig waren, zu einem statistischen Copolyester zu gelangen, der nach einer nachfolgenden Nachkondensation zur Flaschenherstellung für Getränke geeignet ist.

Insbesondere beinhaltet nun das erfindungsgemäße Verfahren die Schritte Zudosieren und Einmischen von bis zu 10 Mol-%, bezogen auf die fertige Schmelze, einer Verbindung aus der Gruppe der Lactone, sowie wahlweise weiterer Additive in eine Schmelze, die aus einem Polyester mit mindestens 90 Mol-% Polyethylenterephthalateinheiten besteht. Anschließend wird die Schmelze nach einer genügend langen, meist vorrichtungsbedingten Verweilzeit, die unter 30 Minuten liegt und bevorzugt maximal 20 Minuten beträgt, weiterverarbeitet oder ausgetragen, granuliert und weiterverarbeitet.

Ein bevorzugter Teilschritt der Weiterverarbeitung ist die Festphasenpolykondensation, durch die einerseits das Molekulargewicht des Copolyesters erhöht und andererseits der Acetaldehydgehalt vermindert wird. Dabei sind die Kristallisation und Trocknung des Granulats vorgeschaltet. Die Formgebung zu Formkörpern, bevorzugt zu Hohlkörpern oder deren Preforms, bildet die letzte Stufe des Verfahrens.

Eine andere bevorzugte Art der Weiterverarbeitung der Schmelze des erfindungsgemäßen Copolyesters ist das Verspinnen zu Fasern und Filamenten.

Das erfindungsgemäße Verfahren mit sehr kurzen Reaktionszeiten für die Addition der Lactone, welche eine Ringstruktur und bevorzugt 6 bis 12 C-Atome haben, in die Polyesterkette hat gegenüber anderen Modifikationsarten wesentliche Vorteile. So führt die Addition zu keinen abgespaltenen Nebenprodukten, welche weggeführt werden müssen.

Damit kann das gegen Gasaustausch abgeschlossene und unter höherem Druck als der Lacton-Dampfdruck stehende Reaktionssystem ein einfaches, von der Schmelze durchströmtes Rohr sein, welches stromabwärts mit einer Mischvorrichtung versehen ist. Dafür kommen Dynamikmischer und bevorzugt Statikmischer zur Anwendung. Von ganz besonderem Vorteil ist jedoch, daß die Reaktionszeit kurz genug ist, daß das erfindungsgemäße Verfahren ohne Nachteil einem bestehenden Herstellungsverfahren, z.B. für konventionelles Polyethylenterephthalat, nachgeschaltet werden kann, beispielweise nur in einem Teilstrom der Schmelze.

Die trotz tieferem Schmelzpunkt unbeeinflußte Viskosität ist von großer Bedeutung für die mechanischen Eigenschaften der Schmelze und der Formteile, für die die erfindungsgemäßen Copolyester entwickelt wurden.

Der tieferliegende Schmelzpunkt der erfindungsgemäßen Copolyester hängt von der zudosierten Menge Lacton ab, welche mit maximal 10 Mol-%, vorteilhaft mit 0,5 bis 8 Mol-%, bevorzugt mit 1 bis 6 Mol-% und besonderes bevorzugt mit 2 bis 5 Mol-% eingesetzt wird. Er gestattet die Verarbeitung der Copolyester bei tieferen Temperaturen, was in vorteilhafter Weise die Acetaldehydbildung vermindert.

Polyethylenterephthalat enthält in der Regel verfahrensbedingt kleine Anteile an Diethylenglykol-Einheiten als Kettenbausteine, die auch als Comonomere zu rechnen sind. Das Verfahren gestattet Polyester zu verwenden, die bis zu 5 Mol-% Diethylenglykol enthalten. Wesentlich ist lediglich, daß die Gesamtmenge der Comonomere nicht mehr als 10 Mol-% beträgt.

Nachfolgend wird das erfindungsgemäße Verfahren noch näher erläutert und mit Beispielen belegt.

Bevorzugt erfolgt beim erfindungsgemäßen Verfahren die Zudosierung des flüssigen Lactons in ein abgeschlossenes System, z.B. in eine von der Schmelze durchströmten Rohrleitung, in welcher ein statischer Mischer für die Verteilung des Lactons in der PET-Schmelze sorgt. Reaktoren und/oder Extruder sind bei diesem Verfahren nicht erforderlich.

Die notwendige Schmelzeverweilzeit zur weitgehenden Umsetzung des Lactons vom Moment der Zugabe in die PET-Schmelze bis zum Austritt beträgt weniger als 30 Minuten, bevorzugt maximal 20 Minuten.

Ein in der Regel auch nach guter Vermischung nach dieser Verweilzeit übrig bleibender Restmonomeranteil wird bei einer nachfolgenden Nachkondensation vollständig umgesetzt.

Deshalb ist die zusätzliche Zugabe eines weiteren Katalysators neben dem bereits im PET befindlichen nicht notwendig, was toxikologische Probleme bei Anwendungen als Lebensmittelverpackung vermeidet und somit einen Vorteil des erfindungsgemäßen Verfahrens darstellt.

Als PET-Schmelze wird bevorzugt Polyethylenterephthalat mit dem bei der Herstellung gebildeten üblichen Gehalt an Diethylenglykol-Einheiten und den bekannten Katalysatoren und Stabilisatoren eingesetzt. Als weitere Additive, wie sie z.B. in DE-27 15 932 C2 zitiert sind, werden verwendungsbedingte Additive eingesetzt. Dabei sind solche aus dem Stand der Technik zur Farbregulierung bevorzugt. Die Intrinsic-Viskosität liegt vorzugsweise im Bereich von 0,5 bis 0,8 dℓ/g und entspricht in der Regel textiler Viskosität. Damit kann bei der sich anbietenden Einbindung des erfindungsgemäßen Verfahrens in ein übergeordnetes flexibles und wirtschaftliches Anlagenkonzept ein anderer Teilstrom derselben PET-Schmelze nach nachträglicher Mattierung vorteilhaft für die Herstellung von Fasern oder Filamenten verwendet werden. Die Temperatur der PET-Schmelze liegt im Bereich von 265 bis 310 °C, und bevorzugt zwischen 270 und 295°C. Der Druck liegt über dem Lactondampfdruck. Im Falle von ε-Caprolacton läßt sich der Dampfdruck als Funktion der Temperatur näherungsweise angeben mit der Gleichung

$$p = 4{,}6087 \cdot 10^5 \cdot e^{-\frac{6581}{\theta + 273{,}15}}$$

mit

p = Dampfdruck in bar (abs.)
θ = Temperatur in °C

Das nach dem erfindungsgemäßen Verfahren erhaltene amorphe Copolyester-Rohgranulat wird bevorzugt nach den für Flaschengranulat bekannten Verfahren kristallisiert und in einer Festphasenpolykondensationsanlage auf höhere Intrinsic-Viskosität und niedrigen Acetaldehydgehalt gebracht, bevor es als fertiges (bottle grade) Flaschengranulat, z.B. zu Vorformlingen (preforms) und Flaschen verarbeitet wird.

Die Lacton-Menge wird so gewählt, daß der für die Flaschen- bzw. Preform-Herstellung gewünschte reduzierte Schmelzpunkt resultiert. Dies wird vorteilhaft mit dem Zusatz von 2 bis 5 Mol-% Lacton erreicht, weil der Einfluß auf die Schmelzpunktabsenkung etwa gleich ist, wie bei den herkömmlichen Comonomeren, d.h. ca. 2 °C pro Mol-%. Für spezielle Anforderungen, z.B. einwandfreie Klarheit und Transparenz auch bei sehr dickwandigen Preforms, sind u.U. höhere Konzentrationen bis maximal 10 Mol-% erforderlich.

Die nachfolgenden Beispiele dienen der Illustration und Unterstützung der Erfindung.

**Beispiel 1**

Ausgegangen wurde von einem pigmentfreien, amorphen PET-Granulat mit folgenden Materialeigenschaften:

- Intrinsic-Viskosität (I.V.) 0,663 dℓ/g

Die Intrinsic-Viskosität wurde bestimmt durch Messen der relativen Lösungsviskosität R.V. in einer Lösungsmittelmischung, bestehend aus gleichen Massenanteilen Phenol und 1,1',2,2'-Tetrachlorethan. Die Polyesterkonzentration C betrug 0,5 g/dℓ, die Meßtemperatur 20 °C. Die Umrechnung auf I.V. erfolgte mit der Gleichung von Huggins, wobei $K_H$ = 0,35:

$$I.V. = \frac{\sqrt{1 + 4K_H(R.V.\,{-}1)}\ {-}1}{2K_H \cdot C} = $$

$$\frac{\sqrt{1 + 1{,}4\,(R.V.\,{-}1)}\ {-}1}{0{,}35}\ (d\ell/g)$$

- Schmelzpunkt (DSC, 20 °C/min) 253,7 °C

Die mit einer DSC-Aufheizgeschwindigkeit von 20 °C/min gemessenen Schmelzpunkte sind im Vergleich zu den Meßwerten, die man mit 10 °C/min erhalten würde, um ca. 3 °C niedriger.

- Diethylenglykolgehalt 2,0 Mol-%
- Antimongehalt (als $Sb_2O_3$) 250 ppm Sb
- Phosphorgehalt (als $H_3PO_4$) 11 ppm P

Dieses Granulat wurde kristallisiert und getrocknet und dann einem Einschnecken-Aufschmelzextruder zugeführt, um eine Schmelze zu erzeugen deren Schmelzedruck $1{\times}10^4$ KPa (100 bar) betrug. Der Weg der Schmelze führte dann in einer beheizten Leitung, in welcher eine Zahnradpumpe zur Durchsatzeinstellung montiert war, zu einem Gießkopf, an dem $5{\times}10^3$ KPa (50 bar) gemessen wurden, wo zwei Schmelzestränge extrudiert, in Wasser gekühlt und granuliert werden konnten. Die Temperatur wurde auf 290 °C eingestellt.

Als Comonomer wurde monomeres ε-Caprolacton der Firma Interox Chemicals Ltd. verwendet. Diese bei Raumtemperatur flüssige Verbindung wurde mit einer Dosierpumpe in den Granulateinzugsstutzen des Extruders geleitet, wo sich das Caprolacton in der Folge mit dem geschmolzenen PET ohne Rückverdampfung vermischte und zu reagieren begann. Der apparative Teil der ersten Versuche entsprach somit noch etwa dem am nächsten kommenden Stand der Technik, nämlich J05059192. Die zudosierte Menge Caprolacton wurde auf 5 Mol-% eingestellt, was bedeutet, daß im modifizierten Polyester auf 95 Terephthalateinheiten 5 Lactoneinheiten kamen. Mit maximaler Leistung der Dosierpumpnpe (2000 mℓ/h) und einem Gesamtdurchsatz von 71,2 kg/h resultierte eine Verweilzeit von 10 Minuten, gerechnet vom Granulateinzug bis zum Gießkopf (die effektive Schmelzeverweilzeit betrug schätztungsweise ca. 9 Minuten). Die austretenden Schmelzestränge waren sauber, homogen, blasen- und dampffrei.

Die Analyse des so hergestellten, modifizierten Granulats zeigte unerwarteterweise, daß einerseits die Intrinsic-Viskosität bis auf einen kleinen hydrolytischen Abbau, herrührend von geringer Restfeuchte im Ausgangsgranulat, praktisch konstant geblieben war (I. V. = 0,642 dℓ/g), daß andererseits aber der Schmelzpunkt auf 244,3 °C gesunken war, d.h. um 1,88 °C/Mol-%. Damit war erwiesen, daß sich das Caprolacton tatsächlich in die Molekülketten eingebaut und einen statistischen Copolyester gebildet hatte.

**Beispiel 2**

Unter Verwendung des gleichen Ausgangsgranulats, wie in Beispiel 1, wurde ein analoger Versuch mit dem bei Raumtemperatur ebenfalls flüssigen γ-Butyrolacton (bezogen von der Firma Fluka Chemie AG) durchgeführt. Die Dosierung betrug ebenfalls 5 Mol-%. Die aus dem Gießkopf austretenden Schmelzestränge dampften allerdings relativ stark, was auch durch Verlängerung der Verweilzeit (Durchsatzreduktion) nicht wesentlich verringert werden konnte. Eine bei einer Schmelzeverweilzeit von ca. 20 Minuten genommene Probe hatte einen Schmelzpunkt von 251,7 °C. Diese geringe Schmelzpunktabnahme von 2 °C läßt die Folgerung zu, daß zwar das Butyrolacton nicht völlig inert ist, daß aber offenbar nur ca. 20 % der eingesetzten Menge (ca. 1 Mol-%) reagiert haben und deshalb γ-Butyrolacton mangels Reaktionsfreudigkeit weniger gut geeignet ist.

Demgegenüber dürften die Lactone aus der homologen Reihe von ε-Caprolacton an aufwärts, d.h. Lacton-7, Lacton-8, Lacton-9, Lacton-10, Lacton-11 und Laurin-Lacton wegen ihrer weniger stabilen Ringe für das erfindungsgemäße Schmelzemodifizierungsverfahren besonders geeignet sind (die dem Lacton zugeordnete Nummer kennzeichnet die Anzahl der Kohlenstoffatome im Ringmolekül).

**Beispiel 3**

Ein Vertreter der aromatischen Lactone ist Phthalid. Sein Schmelzpunkt beträgt 75 °C. Obwohl seine Reaktionsfreudigkeit gering ist, kann es als Beispiel für diejenigen Lactone dienen, die vor der Flüssigdosierung zuerst aufgeschmolzen werden müssten. Eine DSC-Messung ergab eine Schmelzenthalpie von 147 J/g. Ein Laborversuch, bei welchem das Phthalid 3 Stunden lang bei 85 °C unter Stickstoffbeschleierung in flüssiger Phase gehalten wurde, zeigte keine Veränderung von Farbe oder Schmelzpunkt, so daß vom Materialverhalten her eine Aufschmelzstufe im Verfahren möglich wäre.

**Beispiel 4**

In der eigentlichen Erfindungs-Ausführungsform wurde zwischen dem Aufschmelzextruder und der Zahnradpumpe in die Schmelzeleitung ein statischer Mischer, bestehend aus 13 Mischelementen des Typs SMX der Firma Sulzer, mit einem Röhrchen im Eintrittsflansch zur Einspritzung von flüssigen Additiven, eingebaut.

Mit dieser Vorrichtung wurden 4 Mol-% ε-Caprolacton in die PET-Schmelze eindosiert. Bei diesem Mischverhältnis wurde mit den 13 SMX-Elementen theoretisch (gemäß Mischgüte-Diagramm von Sulzer) eine Mischgüte σ/X (Variationskoeffizient) von ca. 0,01 erreicht. Als praktisch homogen gilt bereits ein Variationskoeffizient von 0,05, der ungefähr 10 Mischelementen entspricht. Da auf die physikalische Verteilung eine Vergleichsmäßigung durch die chemische Reaktion (Umesterung) folgte, war die Homogenität am Schluß sogar noch besser.

Gefahren wurde der Versuch bei einer Schmelzetemperatur von 290 °C und einem Gesamtdurchsatz von 70 kg/h (ε-Caprolacton-Menge = 1567 mℓ/h), ausgehend vom gleichen PET Granulat, wie in Beispiel 1. Die Schmelzeverweilzeit vom Eintritt in den Statikmischer bis zum Gießkopf betrug 10 Minuten. Der Schmelzedruck betrug vor dem Gießkopf 50 bar.

Die Intrinsic-Viskosität einer vor Beginn der Caprolacton-Dosierung gewonnenen Probe betrug 0,653 dℓ/g, diejenige des Caprolacton-Copolyester 0,655 dℓ/g, war also praktisch gleich. Der Schmelzpunkt des COPET-Granulats betrug 246,3°C. Somit war die molare Wirkung auf den Schmelzpunkt 1,85 °C/Mol-%, also fast gleich wie in Beispiel 1, was ein weiteres Indiz dafür ist, daß das ε-Caprolacton weitgehend umgesetzt wurde.

Eine analytische Untersuchung des amorphen Granulates ergab, daß von der eingesetzten Caprolactonmenge ca. 95% chemisch in den Polyesterketten eingebaut und ca. 5% noch in freier Form (physikalisch gebunden) vorlag.

**Beispiel 5**

Als Vergleich zum neuen Schmelzemodifizierungsverfahren wurde ein Caprolacton-COPET auf konventionelle Art in einer Polyester-Batch-Anlage, bestehend aus Veresterungs- und Polykondensationsreaktor, hergestellt.

Die Zugabe von 4 Mol-% ε-Caprolacton erfolgte zu Beginn der Veresterung in das Restmaterial von einem vorangegangen gleichen Ansatz im Veresterungsreaktor. Aus der gewählten Rezeptur resultierte das folgende amorphe COPET-Granulat:

- Intrinsic-Viskosität (I.V.)    0,637 dℓ/g
- Schmelzpunkt (DSC, 20 °C/min)    247,7 °C
- Diethylenglykolgehalt    1,3 Mol-%
- Antimongehalt (als $Sb_2O_3$)    130 ppm Sb
- Phosphorgehalt (als $H_3PO_4$)    20 ppm P
- Cobaltgehalt (als $Co(CH_3COO)_2 \cdot 4H_2O$)    20 ppm Co

Auch beim konventionellen Einsatz des Caprolactons zur COPET-Herstellung war der Einfluß auf den Schmelzpunkt etwa gleich wie beim erfindungsgemäßen Verfahren. Freies Caprolacton war keines festzustellen. Aufgrund der Zugabe von Cobaltacetat war die Farbe dieses Granulats leicht bläulich.

**Beispiel 6**

COPET-Granulat von Beispiel 4 wurde in einem Schaufeltrockner bei 160 °C kristallisiert und dann in einem Vakuum-Taumeltrockner bei einer Produkttemperatur von 210 °C in fester Phase polykondensiert. Um auf einen I.V.-Wert von 0,82 dℓ/g zu kommen, waren bedingt durch die hohe Katalysatormenge vom ursprünglichen PET lediglich 3,5 Stunden notwendig, gerechnet ab einer Produkttemperatur von 200 °C. In dieser kurzen Zeit konnte der Acetaldehydgehalt nur auf 2,8 ppm reduziert werden. Andererseits war nach der Nachkondensation kein freies Caprolacton mehr nachweisbar.

Interessant war das Materialverhalten bei der Weiterverarbeitung: Auf einer Spritzgußmaschine des Typs Demag DZ 210-1200/1200 mit einem 8-Kavitäten-Werkzeug wurden aus dem nachkondensierten und getrockneten Granulat Flaschenvorformlinge (preforms) mit einem Gewicht von 48 g für 1,5 ℓ-Flaschen hergestellt. Überraschend war, daß bei einer ungewöhnlich tiefen Temperatur von 265 °C immer noch einwandfrei klare und transparente Preforms gespritzt werden konnten. Ein vom Markt als guter Standard anerkanntes Flaschengranulat mit gleicher Intrinsic-Viskosität und ungefähr gleichem Schmelzpunkt mußte bei 5 °C höherer Temperatur verspritzt werden. Als besonderes Merkmal war bei den erfindungsgemäßen Preforms, im polarisierten Licht betrachtet, keine Struktur in der Preformwand zu erkennen, was derartige Copolyester auch für dickwandigere Preforms für Mehrweg-(refillable)Flaschen geeignet macht, wo mit normalem Flaschen-Copolyester Trübungen, resultierend aus beginnender Kristallisation, ein Problem darstellen.

**Beispiel 7**

Auf gleiche Art wie in Beispiel 6 wurde auch das COPET-Granulat von Beispiel 5 weiterbehandelt, wobei die effektive Nachkondensationszeit 10 Stunden betrug und das Granulat nach dieser Zeit eine Intrinsic-Viskosität von 0,91 dℓ/g und einen Acetaldehydgehalt von 0,5 ppm aufwies. Trotz der hohen Viskosität konnte das Granulat immer noch bei der normalen Standardtemperatur von 270°C (Schmelzeverteiler 280°C) zu transparenten Preforms spritzgegossen werden. Diese Preforms wurden anschließend auf einer Sidel-Streckblasmaschine zu Flaschen geblasen, die von einwandfreiem Aussehen und leicht lila-bläulichem Farbton waren. Der Acetaldehydgehalt in den Flaschen entsprach der Coca-Cola-Norm, und in einem Migrationstest mit Wasser konnten kaum Spuren des physiologisch unbedenklichen ε-Caprolacton gefunden werden, so daß einer Verwendung dieses neuartigen Copolyesters für Getränkeflaschen nichts im Wege stehen sollte.

Schema einer integrierten COPET-Herstellung

Auf Grund der Beschreibung und der Möglichkeiten des erfindungsgemäßen Verfahrens kann man sich nun folgende, wirtschaftlich optimale und besonders bevorzugte Konfiguration einer großen Polyesteranlage vorstellen.

1     Endreaktor der kontinuierlichen Polykondensation für Homo-PET-Schmelze
2     Verzweigung für eine textile und eine "bottle grade"-Verwendung
3     Titandioxid-Pulver Zugabe
4     Titandioxid-Dosierung
5     Zweiwellenextruder (für Titandioxid-Einarbeitung)

6     Statikmischer
7     Austrag mattierter Homo-PET-Strom (textil) zum Direktspinnen von Fasern oder Filamenten
8     Lacton-Zugabe
9     Flüssigkeits-Dosierpumpe
10    Statikmischer
11    COPET-Schmelzestrom
12    Granulierung
13    Kristallisation (Teil der SSP-Anlage)
14    Festphasenpolykondensation (SSP)
15    Austrag COPET-Flaschengranulat (bottle grade)

Auf dem Weg über die Dosierung des Lactons ist es vorteilhaft noch andere, inerte und im Lacton lösliche Additive in die PET-Schmelze zuzudosieren, z.B. schmelzelösliche Farbstoffe, insbesondere kleine Mengen eines Blaufarbstoffes als Blue-Toner zur Farbregulierung.

**Patentansprüche**

1. Verfahren zur Herstellung von linearen w-Hydroxycarbonsäureeinheiten enthaltenden Copolyestern aus Polyestern, die mindestens 90 Mol-% Polyethylenterephthalat-Einheiten, bis zu 5 Mol-% an Diethylenglykol-Einheiten und ggf. die bekannten Katalysatoren und Stabilisatoren enthalten, dadurch gekennzeichnet, daß man der bereits fertig hergestellten Polyesterschmelze in einem gegen Gasaustausch abgeschlossenen und unter höherem Druck als der Lacton-Dampfdruck stehenden System bis zu 10 Mol-%, bezogen auf die fertige Schmelze, mindestens einer Verbindung der Gruppe der Lactone, sowie wahlweise weitere Additive zudosiert, und ohne zusätzliche Zugabe von weiteren Katalysatoren mit der Schmelze intensiv mischt, und

 die so entstandenen Copolyester nach einer totalen Verweilzeit von unter 30 Minuten und einer Temperatur in einem Bereich von 265 bis 310 °C, weiterverarbeitet oder austrägt oder granuliert und nachfolgend weiterverarbeitet, wobei die Copolyester mit den Ausgangspolyestern viskositätsgleich sind und statistisch verteilt w-Hydroxycarbonsäureeinheiten in den Polymerketten enthalten sind, und
 wobei das abgeschlossene System ein mit einer Eintragsöffnung und stromabwärts mit einem Mischer versehenes Rohr ist, welches unter Druck steht.

2. Verfahren nach Anspruch 1, dadurch gekennzeichnet, daß die Weiterverarbeitung die Schritte Kristallisation, Trocknung, Festphasenpolykondensation und die Herstellung von Formkörpern einschließt.

3. Verfahren nach Anspruch 1, dadurch gekennzeichnet, daß die Weiterverarbeitung die Herstellung von Fasern und Filamenten einschließt.

4. Verfahren nach einem der Ansprüche 1 bis 3, dadurch gekennzeichnet, daß der Mischer ein Statikmischer ist.

5. Verfahren nach einem der Ansprüche 1 bis 4, dadurch gekennzeichnet, daß die zudosierte Verbindung ein Lacton mit 6 bis 12 C-Atomen ist, wobei ε-Caprolacton bevorzugt ist.

6. Verfahren nach einem der Ansprüche 1 bis 5, dadurch gekennzeichnet, daß das Lacton in Mengen von 0,5 bis 8 Mol-%, bevorzugt von 1 bis 6 Mol-% und besonders bevorzugt von 2 bis 5 Mol-% zudosiert wird.

7. Verfahren nach einem der Ansprüche 1 bis 6, dadurch gekennzeichnet, daß der Polyester bis zu 5 Mol-%-Einheiten aus Diethylenglykol enthält, wobei die Summe der Diethylenglykoleinheiten und der Hydroxycarbonsäureeinheiten 10 Mol-% nicht überschreitet.

8. Verfahren nach einem der Ansprüche 1 bis 7, dadurch gekennzeichnet, daß die Verweilzeit maximal 20 Minuten beträgt.

9. Verfahren nach einem der Ansprüche 1 bis 8, dadurch gekennzeichnet, daß die Schmelzetemperatur im Bereich von 270 bis 295 °C liegt.

10. Verfahren nach einem der Ansprüche 1 bis 9, dadurch gekennzeichnet, daß die weiteren Additive verwendungsbedingte Additive sind, wobei lösliche inerte Additive, insbesondere solche zur Farbregulierung, bevorzugt sind.

11. Nachkondensierte lineare Copolyester, welche statistisch verteilt w-Hydroxycarbonsäureeinheiten enthalten, herstellbar nach dem Verfahren nach einem der Ansprüche 1, 2 oder 4 bis 10.

12. Verwendung der nachkondensierten linearen Copolyester, welche statistisch verteilte ω-Hydroxycarbonsäureeinheiten enthalten, nach Anspruch 11 zur Herstellung von Hohlkörpern, insbesondere von Flaschen und Behältern.

13. Verwendung der Copolyester, welche statistisch verteilte w-Hydroxycarbonsäureeinheiten enthalten, nach Anspruch 11 zur Herstellung von Fasern und Filamenten.

**Claims**

1. A process for the production of co-polyesters containing linear ω-hydroxy carbonic acid moieties from polyesters containing at least 90 mole-% polyethylene therephthalate units, up to 5 mole-% diethylene glycol units and optionally known catalysts and stabilisers, characterised in that at least one compound selected from the of the group of lactones in an amount of up to 10 mole-%, based on the ready prepared melt, as well as optionally further additives are dosed to the ready prepared polyester melt in a sealed system without gas exchange, which is at a pressure above the lactone vaporisation pressure, and are mixed intensely with the melt without further addition of catalysts, wherein after a total time period of less than 30 minutes and a temperature in a range of from 265° to 310 °C the co-polyesters thus obtained are further processed or discharged or granulated and subsequently processed, wherein the co-polyesters and the starting polyesters are equal in viscosity and the ω-hydroxy carbonic acid units are randomly distributed in the polymer chains, and wherein the sealed system is a bar under pressure having a supply aperture and a stirrer located downstream thereof.

2. The process according to claim 1, characterised in that the further processing includes the steps of crystallisation, drying, solid phase poly-condensation and the production of shaped bodies.

3. The process according to claim 1, characterised in that the further processing includes the production of fibres and filaments.

4. The process according to any of the claims 1 to 3, characterised in that the stirrer is a static stirrer.

5. The process according to any of the claims 1 to 4, characterised in that the dosed compound is a lactone having 6 to 12 C atoms, with ε-caprolactam being preferred.

6. The process according to any of the claims 1 to 5, characterised in that the lactone is added in an amount of from 0,5 to 8 mole-%, preferably from 1 to 6 mole-%, and more preferred from 2 to 5 mole-%.

7. The process according to any of the claims 1 to 6, characterised in that the polyester contains up to 5 mole-% diethylene glycol units, wherein the sum of diethylene glycol units and hydroxy carbonic acid units does not exceed 10 mole-%.

8. The process according to any of the claims 1 to 7, characterised in that the time period is no more than 20 minutes.

9. The process according to any of the claims 1 to 8, characterised in that the temperature of the melt is in the range of from 270 to 295 °C.

10. The process according to any of the claims 1 to 9, characterised in that the additional additives are use-dependant additives, wherein soluble, inert additives, particularly those for controlling the colour, are preferred.

11. Post-condensed, linear co-polyester containing randomly distributed ω-hydroxy carbonic acid units producible according the process of any of the claims 1, 2 or 4 to 10.

12. Use of the post-condensed linear co-polyester containing randomly distributed ω-hydroxy carbonic acid units according to claim 11 for the production of hollow bodies. particularly of bottles and container.

13. The use of the co-polyester containing randomly distributed ω-hydroxy carbonic acid units according to claim 11 for the production of fibres and filaments.


**Revendications**

1. Procédé pour la production de copolyesters linéaires contenant des unités d'acide carboxylique ω-hydroxy à partir de polyesters qui contiennent au moins 90 % mol d'unités de polyéthylène-téréphtalate, jusqu'à 5 % mol d'unités de diéthylèneglycol et, le cas échéant, les catalyseurs et stabilisants connus, caractérisé en ce que, dans un système fermé à l'épreuve des échanges gazeux et soumis à une pression supérieure à la pression de vapeur de la lactone, on ajoute de manière dosée au bain de polyester déjà réalisé jusqu'à 10 % mol, rapporté audit bain réalisé, d'au moins une liaison du groupe des lactones, ainsi que d'autres additifs au choix, et en ce qu'on les mélange intensivement au bain sans addition complémentaire de catalyseurs, et

en ce qu'après un temps de séjour total inférieur à 30 minutes et à une température de l'ordre compris entre 265 et 310°C, on continue à traiter les copolyesters ainsi obtenus, ou on les décharge ou on les granule puis on continue à les traiter,
les copolyesters présentant la même viscosité que les polyesters de départ, et les chaînes de polymères contenant des unités d'acide carboxylique ω-hydroxy réparties de manière statistique, et
ledit système fermé étant constitué d'un tube pourvu d'une ouverture d'entrée, d'un mélangeur à l'aval, et maintenu sous pression.

2. Procédé selon la revendication 1, caractérisé en ce que le traitement complémentaire comprend les étapes de cristallisation, séchage, polycondensation à l'état solide et la réalisation de corps moulés.

3. Procédé selon la revendication 1, caractérisé en ce que le traitement complémentaire comprend la fabrication de fibres et de filaments.

4. Procédé selon l'une des revendications 1 à 3, caractérisé en ce que le mélangeur est un mélangeur statique.

5. Procédé selon l'une des revendications 1 à 4, caractérisé en ce que la liaison faisant l'objet d'une addition dosée est une lactone ayant de 6 à 12 atomes C, la ε-caprolactone étant préférée.

6. Procédé selon l'une des revendications 1 à 5, caractérisé en ce que la lactone est ajoutée de manière dosée en quantités comprises entre 0,5 et 8 % mol, de préférence de 1 à 6 % mol et plus particulièrement de 2 à 5 % mol.

7. Procédé selon l'une des revendications 1 à 6, caractérisé en ce que le polyester contient jusqu'à 5 % mol d'unités de diéthylèneglycol, la somme des unités de diéthylèneglycol et des unités d'acide carboxylique ω-hydroxy ne dépassant pas 10 % mol.

8. Procédé selon l'une des revendications 1 à 7, caactérisé en ce que ledit temps de séjour s'élève à 20 minutes maximum.

9. Procédé selon l'une des revendications 1 à 8, caractérisé en ce que la température du bain est de l'ordre compris entre 270 et 295°C.

10. Procédé selon l'une des revendications 1 à 9, caractérisé en ce que lesdits autres additifs sont des additifs déterminés par l'utilisation, les additifs inertes solubles, en particulier ceux utilisés pour réguler la couleur, étant préférés.

11. Copolyesters linéaires recondensés, contenant des unités d'acide carboxylique ω-hydroxy réparties de manière statistique, obtenus selon le procédé conforme à l'une des revendications 1, 2 ou 4 à 10.

12. Application de copolyesters linéaires recondensés, contenant des unités d'acide carboxylique ω-hydroxy réparties de manière statistique, selon la revendication 11, à la fabrication de corps creux, en particulier de bouteilles et récipients.

13. Application de copolyesters linéaires recondensés, contenant des unités d'acide carboxylique ω-hydroxy réparties de manière statistique, selon la revendication 11, à la fabrication de fibres et de filaments.